(19) Europäisches Patentamt
European Patent Office
Office européen des brevets

(11) **EP 3 915 943 A1**

(12) **EUROPEAN PATENT APPLICATION**
published in accordance with Art. 153(4) EPC

(43) Date of publication:
**01.12.2021 Bulletin 2021/48**

(51) Int Cl.:
***C01G 53/00*** (2006.01)    ***H01M 4/505*** (2010.01)
***H01M 4/525*** (2010.01)

(21) Application number: **19911876.1**

(22) Date of filing: **04.12.2019**

(86) International application number:
**PCT/JP2019/047316**

(87) International publication number:
**WO 2020/153000 (30.07.2020 Gazette 2020/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.01.2019 JP 2019008264**

(71) Applicant: **Tanaka Chemical Corporation
Fukui-shi, Fukui 910-3131 (JP)**

(72) Inventors:
• **KATAGIRI, Kazuki
Fukui-shi, Fukui 910-3131 (JP)**
• **MASUKAWA, Takaaki
Fukui-shi, Fukui 910-3131 (JP)**
• **TAKASHIMA, Masahiro
Fukui-shi, Fukui 910-3131 (JP)**

(74) Representative: **Weickmann, Hans
Weickmann & Weickmann
Patent- und Rechtsanwälte PartmbB
Postfach 860 820
81635 München (DE)**

(54) **SMALL PARTICLES OF COMPLEX HYDROXIDE FOR NONAQUEOUS ELECTROLYTE SECONDARY BATTERIES**

(57)    The present invention provides a composite hydroxide in which reactivity of a lithium compound is equalized with another composite hydroxide having a large particle diameter.

The composite hydroxide includes at least one metal selected from the group consisting of nickel, cobalt, and manganese, the composite hydroxide being a precursor of a positive electrode active material for a non-aqueous electrolyte secondary battery, wherein a secondary particle diameter with a cumulative volume percentage of 50% by volume (D50) is 4.0 $\mu$m or less, tapped density (g/ml)/secondary particle diameter with cumulative volume percentage of 50% by volume (D50) ($\mu$m) is 0.60 g/ml●$\mu$m or more, and a specific surface area measured by a BET method is 15.0 m$^2$/g or less.

FIG.1(A)

FIG.1(B)

**Description**

Technical Field

The present invention relates to a composite hydroxide which is a precursor of a positive electrode active material for a non-aqueous electrolyte secondary battery, especially to a composite hydroxide in which reactivity with a lithium compound is uniformized regardless of size of a particle diameter.

Background Art

Recently, secondary batteries have been used in various fields such as sources of electricity for portable devices, power sources for vehicles and the like using electricity as a single power source or in combination, and the like from the point of reducing loads on the environment. As a secondary battery, there is a secondary battery using a non-aqueous electrolyte such as lithium ion secondary batteries, for example. Secondary batteries using a non-aqueous electrolyte such as lithium ion secondary batteries are suitable for miniaturization and weight reduction and have excellent battery characteristics such as high utilization efficiency, high cycle characteristics, and large discharge capacity.

Since it is advantageous to increase the capacity of secondary batteries in order to sufficiently exert the above-described battery characteristics of the secondary batteries using a non-aqueous electrolyte, it is required that positive electrode active materials of the non-aqueous electrolyte secondary batteries fill positive electrodes with high density. Positive electrode active materials for the non-aqueous electrolyte secondary batteries can be produced by calcining a mixture of a composite hydroxide, which is a precursor of the positive electrode active material, and a lithium compound, for example. Accordingly, the composite hydroxide, which is a precursor of a positive electrode active material, is also required to have high filling density as with positive electrode materials.

Then, as a nickel cobalt manganese composite hydroxide capable of providing a positive electrode active material for a non-aqueous electrolyte secondary battery with high density, a nickel cobalt manganese composite hydroxide having a BET specific surface area of 1.0 to 10.0 $m^2/g$, a carbon content of 0.1% by mass or less, a half value width of the (101) plane in X-ray diffraction of 1.5° or less, and an average particle diameter of 5 to 25 $\mu$m has been proposed (Patent Literature 1).

Meanwhile, reactivity with a lithium compound of a composite hydroxide, which is a precursor of a positive electrode active material, varies according to size of a particle diameter thereof. That is, as the particle diameter of the composite hydroxide increases, the specific area of the composite hydroxide decreases; therefore, reactivity with a lithium compound tends to decrease. In the nickel cobalt manganese composite hydroxide in Patent Literature 1, although filling density of the positive electrode active material improves, contributing to excellent battery characteristics, reactivity with a lithium compound changes according to the size of the particle diameter of the nickel cobalt manganese composite hydroxide. In Patent Literature 1, when an added amount of a lithium compound is increased so as to impart good battery characteristics to a nickel cobalt manganese composite hydroxide having a large particle diameter, an excessive amount of lithium reacts with a nickel cobalt manganese composite hydroxide having a small particle diameter, and excellent battery characteristics may not be imparted to the nickel cobalt manganese composite hydroxide having a small particle diameter.

In view of the above, in Patent Literature 1, there remains room for improvement in improving battery characteristics by uniformizing reactivity with a lithium compound regardless of size of a particle diameter.

In addition, in order to obtain a positive electrode active material with high density, a positive electrode active material having multiple peaks in particle size distribution, that is, a so-called bimodal positive electrode active material in which a positive electrode active material having a peak in particle size distribution on the side of a larger particle diameter and a positive electrode active material having a peak in particle size distribution on the side of a smaller particle diameter are mixed, is used in some cases. When lithium is sufficiently reacted with a composite hydroxide having a large particle diameter in producing the positive electrode active material having multiple peaks in particle size distribution, as described above, an excessive amount of lithium may react with the composite hydroxide having a small particle diameter. Then, for a composite hydroxide for the positive electrode active material having multiple peaks in particle size distribution, production of a positive electrode active material in which the composite hydroxide is separated into a composite hydroxide having a large particle diameter and a composite hydroxide having a small particle diameter, an appropriate amount of a lithium compound is added to each of them, and the lithium-containing metal composite oxide having a large particle diameter and the lithium-containing metal composite oxide having a small particle diameter are mixed after calcining has been also used.

However, when adding a lithium compound to each of the composite hydroxide having a large particle diameter and the composite hydroxide having a small particle diameter and calcining each of them, installation of multiple calcining lines is required; therefore, room for improvement in production efficiency of the positive electrode active material has been left.

Document List

Patent Literature

Patent Literature 1: Japanese Patent Application Publication No. 2013-171744

Summary of Invention

Technical Problem

In view of the above circumstances, it is an object of the present invention to provide a composite hydroxide in which reactivity with a lithium compound is equalized with another composite hydroxide having a large particle diameter.

Solution to Problem

The purport of configurations of the present invention is as follows.

[1] A composite hydroxide including at least one metal selected from the group consisting of nickel, cobalt, and manganese, the composite hydroxide being a precursor of a positive electrode active material for a non-aqueous electrolyte secondary battery, wherein a secondary particle diameter with a cumulative volume percentage of 50% by volume (D50) is 4.0 μm or less, tapped density (g/ml)/secondary particle diameter with cumulative volume percentage of 50% by volume (D50) (μm) is 0.60 (g/ml●μm) or more, and a specific surface area measured by a BET method is 15.0 m2/g or less.
[2] The composite hydroxide according to [1], wherein the secondary particle diameter with a cumulative volume percentage of 50% by volume (D50) is 3.5 μm or less.
[3] The composite hydroxide according to [1] or [2], wherein the composite hydroxide includes nickel, cobalt, manganese, and one or more additive metal elements M selected from the group consisting of aluminum, calcium, titanium, vanadium, chromium, zirconium, niobium, molybdenum, and tungsten, and a molar ratio of nickel: cobalt: manganese: additive metal element M is 1 - x - y - z:x:y:z (meaning that 0.1 ≤ x ≤ 0.3, 0.1 ≤ y ≤ 0.3, 0 < z ≤ 0.05, and x + y + z = 1).
[4] The composite hydroxide according to any one of [1] to [3], wherein [secondary particle diameter with cumulative volume percentage of 90% by volume (D90) - secondary particle diameter with cumulative volume percentage of 10% by volume (D10)]/secondary particle diameter with cumulative volume percentage of 50% by volume (D50) is 1.30 or more and 1.80 or less.
[5] The composite hydroxide according to any one of [1] to [4], wherein average particle strength is 45 MPa or more and 100 MPa or less.

In the aspect of [5] above, the "particle strength" means strength (St) calculated according to the equation from Hiramatsu et al. (Journal of the Mining and Metallurgical Institute of Japan, Vol. 81, (1965)) represented by mathematical expression (A) below, with a pressure value at which a maximum displacement is provided while keeping test pressure almost constant taken as test force (P) when test pressure (load) is applied to one composite hydroxide particle arbitrarily selected using a micro compression tester and a displacement of the composite hydroxide particle is measured with the test pressure gradually increased. The "average particle strength" means a value obtained when the above operation is carried out five times in total and an average value of the particle strength measured five times is calculated.

$$St = 2.8 \times P/(\pi \times d \times d) \text{ (d: composite hydroxide particle diameter)} \quad (A)$$

Examples of the micro compression tester include "Micro Compression Tester MCT-510" manufactured by SHIMADZU CORPORATION.

Effects of Invention

According to an aspect of the composite hydroxide of the present invention, by virtue of having a secondary particle diameter with a cumulative volume percentage of 50% by volume (D50) of 4.0 μm or less, tapped density (g/ml)/secondary particle diameter with cumulative volume percentage of 50% by volume (D50) of 0.60 g/ml●μm or more, and a specific surface area measured by a BET method of 15.0 m2/g or less, reactivity of another composite hydroxide having D50 larger than D50 of the composite hydroxide of the present invention with a lithium compound can be equalized.

Accordingly, in producing a positive electrode active material having multiple peaks in particle size distribution using the composite hydroxide of the present invention and another composite hydroxide having D50 larger than D50 of the composite hydroxide of the present invention, the composite hydroxide of the present invention and said another composite hydroxide can be calcined with a lithium compound added thereto in a state where the composite hydroxide of the present invention and said another composite hydroxide are mixed. From the above, production efficiency of the positive electrode active material having multiple peaks in particle size distribution can be improved by using the composite hydroxide of the present invention.

According to an aspect of the composite hydroxide of the present invention, by virtue of having average particle strength of 45 MPa or more and 100 MPa or less, reactivity of another composite hydroxide having D50 larger than D50 of the composite hydroxide of the present invention with a lithium compound can be more reliably equalized.

Brief Description of Drawing

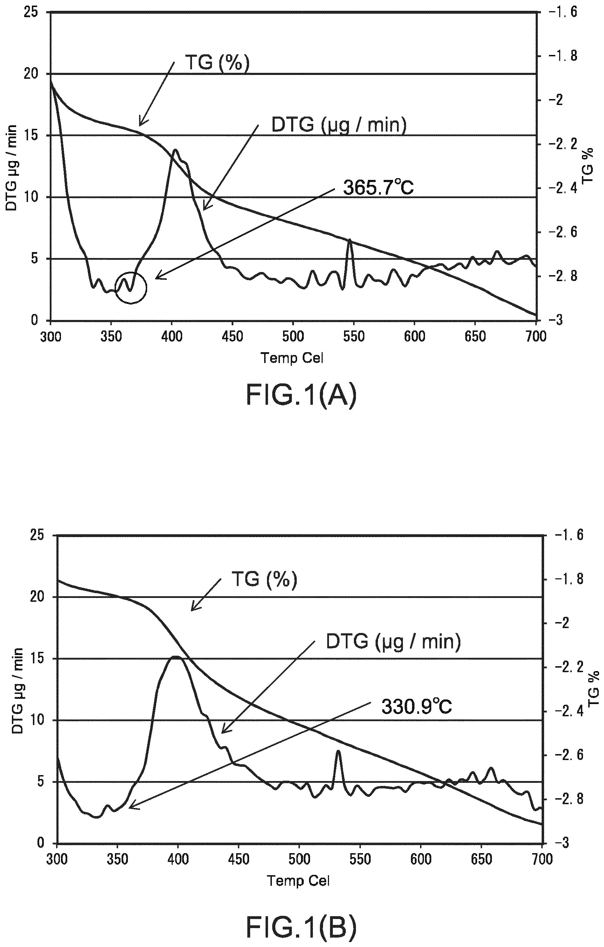

[FIG. 1] FIG. 1(A) is a graph showing results of TG and DTG in Example 1, and FIG. 1(B) is a graph showing results of TG and DTG in Comparative Example 1.

Description of Embodiments

Hereinafter, details of a composite hydroxide, which is a precursor of a positive electrode active material for a non-aqueous electrolyte secondary battery, of the present invention will be described. The composite hydroxide, which is a precursor of a positive electrode active material for a non-aqueous electrolyte secondary battery, of the present invention (hereinafter, sometimes simply referred to as "the composite hydroxide of the present invention") includes at least one metal selected from the group consisting of nickel (Ni), cobalt (Co), and manganese (Mn). That is, the composite hydroxide of the present invention includes one or more of nickel, cobalt, and manganese as an essential metal component.

The composite hydroxide of the present invention is a secondary particle formed from multiple primary particles aggregating. A particle shape of the composite hydroxide of the present invention is not particularly limited and takes a variety of shapes, and examples thereof can include a nearly spherical shape, nearly elliptical shape, and the like.

The composite hydroxide of the present invention has a secondary particle diameter with a cumulative volume percentage of 50% by volume (hereinafter, sometimes simply referred to as "D50") is 4.0 $\mu$m or less. While D50 of the composite hydroxide of the present invention is not particularly limited as long as it is 4.0 $\mu$m or less, an upper limit value thereof is preferably 3.7 $\mu$m and particularly preferably 3.5 $\mu$m from the point of more reliably improving density of a positive electrode active material having multiple peaks in particle size distribution. Meanwhile, a lower limit value of D50 of the composite hydroxide of the present invention is preferably 2.0 $\mu$m and particularly preferably 2.3 $\mu$m from the point of more reliably equalizing, with another composite hydroxide having D50 larger than D50 of the composite hydroxide of the present invention (hereinafter, sometimes simply referred to as "another composite hydroxide"), reactivity with a lithium compound. The above-described upper limit value and lower limit value can be arbitrarily combined.

The composite hydroxide of the present invention has a ratio of tapped density (unit: g/ml) to D50 (unit: $\mu$m), that is, tapped density (g/ml)/D50 ($\mu$m) is 0.60 g/ml●$\mu$m or more. While the value of tapped density (g/ml)/D50 ($\mu$m) of the composite hydroxide of the present invention is not particularly limited as long as it is 0.60 g/ml●$\mu$m or more, a lower limit value thereof is preferably 0.62 g/ml●$\mu$m and particularly preferably 0.64 g/ml●$\mu$m from the point of more reliably equalizing, with the another composite hydroxide, reactivity with a lithium compound. Meanwhile, an upper limit value of the value of tapped density (g/ml)/D50 ($\mu$m) of the composite hydroxide of the present invention is preferably 0.90 g/ml●$\mu$m and particularly preferably 0.75 g/ml●$\mu$m from the point of easiness in production of the composite hydroxide. The above-described upper limit value and lower limit value can be arbitrarily combined.

The composite hydroxide of the present invention has a specific surface area measured by a BET method of 15.0 m²/g or less. While the specific surface area measured by a BET method of the composite hydroxide of the present invention is not particularly limited as long as it is 15.0 m²/g or less, an upper limit thereof is preferably 12.0 m²/g and particularly preferably 10.0 m²/g from the point of more reliably equalizing, with the another composite hydroxide, reactivity with a lithium compound. Meanwhile a lower limit value of the specific surface area measured by a BET method is preferably 5.0 m²/g and particularly preferably 8.0 m²/g from the point of preventing excessive decrease in reactivity with a lithium compound. The above-described upper limit value and lower limit value can be arbitrarily combined.

In the composite hydroxide of the present invention, by virtue of having D50 of 4.0 $\mu$m or less, tapped density (g/ml)/D50 ($\mu$m) of 0.60 g/ml●$\mu$m or more, and a specific surface area measured by a BET method of 15.0 m²/g or less, reactivity with a lithium compound can be equalized with the another composite hydroxide having D50 larger than D50 of the composite hydroxide of the present invention. Accordingly, in producing a positive electrode active material having multiple peaks in particle size distribution using the composite hydroxide of the present invention and the another composite hydroxide having D50 larger than D50 of the composite hydroxide of the present invention, even when the composite hydroxide of the present invention and the another composite hydroxide are subjected to calcining treatment with a lithium (Li) compound added thereto in a state where the composite hydroxide of the present invention and the another composite hydroxide are mixed, the composite hydroxide of the present invention does not excessively react with lithium (Li), and uniform reaction with the lithium (Li) compound is possible regardless of size of particle diameters. From the above, when the composite hydroxide of the present invention is used, it is not required that a composite hydroxide having multiple peaks in particle size distribution is separated into a composite hydroxide having a large particle diameter and a composite hydroxide having a small particle diameter, a lithium compound is added to each of them, and each composite hydroxide is subjected to calcining treatment. Accordingly, when the composite hydroxide of the present invention is used, production efficiency of a positive electrode active material having multiple peaks in particle size distribution can be improved.

While the tapped density of the composite hydroxide of the present invention is not particularly limited as long as the value of tapped density (g/ml)/D50 ($\mu$m) is 0.60 g/ml●$\mu$m or more, a lower limit value thereof is, for example, preferably 1.50 g/ml, more preferably 1.70 g/ml, and particularly preferably 1.80 g/ml from the point of more reliably equalizing, with the another composite hydroxide, reactivity with a lithium compound. Meanwhile, an upper limit value of the tapped density is preferably 2.50 g/ml and particularly preferably 2.20 g/ml from the point of preventing excessive decrease in reactivity with a lithium compound. The above-described upper limit value and lower limit value can be arbitrarily combined.

A value of [secondary particle diameter with cumulative volume percentage of 90% by volume (hereinafter, sometimes simply referred to as "D90") - secondary particle diameter with cumulative volume percentage of 10% by volume (hereinafter, sometimes simply referred to as "D10")]/D50, which represents a particle size distribution width of the composite hydroxide of the present invention, is not particularly limited. In the composite hydroxide of the present invention, reactivity with a lithium compound can be equalized with the another composite hydroxide without carrying out a step of adjusting the particle size distribution width such as a classification step. For example, a lower limit value of the particle size distribution width of the composite hydroxide of the present invention is preferably 1.00, more preferably 1.15, and particularly preferably 1.30 from the point that production efficiency of the composite hydroxide can be improved by omitting the step of adjusting the particle size distribution width. An upper limit value of the above-described particle size distribution width is preferably 1.90 and particularly preferably 1.80 from the point of uniformizing reactivity of particles having a small particle diameter and particles having a large particle diameter in the composite hydroxide of the present invention with a lithium (Li) compound. The above-described upper limit value and lower limit value can be arbitrarily combined.

From the point of uniformization of reactivity with a lithium (Li) compound and production efficiency, a lower limit value of D90 of the composite hydroxide of the present invention is preferably 4.2 $\mu$m and particularly preferably 4.4 $\mu$m, and an upper limit value of D90 is preferably 6.2 $\mu$m and particularly preferably 5.2 $\mu$m. In addition, a lower limit value of D10 of the composite hydroxide of the present invention is preferably 0.2 $\mu$m and particularly preferably 0.4 $\mu$m, and an upper limit value of D10 is preferably 1.6 $\mu$m and particularly preferably 1.4 $\mu$m. The above-described upper limit value and lower limit value can be arbitrarily combined. D10, D50, and D90 described above mean particle diameters measured by a particle size distribution measuring device using a laser diffraction and scattering method.

While average particle strength of the composite hydroxide of the present invention is not particularly limited, a lower limit value thereof is preferably 45 MPa and particularly preferably 55 MPa from the point of more reliably equalizing reactivity with a lithium compound with the another composite hydroxide. Meanwhile, an upper limit value of the average particle strength is preferably 100 MPa and particularly preferably 80 MPa from the point of preventing excessive decrease in reactivity with a lithium compound. The above-described upper limit value and lower limit value can be arbitrarily combined.

Components of the composite hydroxide of the present invention are not particularly limited as long as at least one metal selected from the group consisting of nickel (Ni), cobalt (Co), and manganese (Mn) is included. However, a composite hydroxide including nickel (Ni), cobalt (Co), manganese (Mn), and one or more additive metal elements M selected from the group consisting of aluminum (Al), calcium (Ca), titanium (Ti), vanadium (V), chromium (Cr), zirconium (Zr), niobium (Nb), molybdenum (Mo), and tungsten (W), with a molar ratio of nickel (Ni):cobalt (Co):manganese (Mn):additive metal element M being 1 - x - y - z:x:y:z (meaning that $0.1 \leq x \leq 0.3$, $0.1 \leq y \leq 0.3$, $0 < z \leq 0.05$), and the like can be exemplified, for example.

Next, a method for producing the composite hydroxide of the present invention will be described. First, slurry including a composite hydroxide is obtained by, using a coprecipitation method, appropriately adding a solution including a metal salt, for example, a solution including at least one metal salt selected from the group consisting of a nickel salt (for example, a sulfate salt), a cobalt salt (for example, a sulfate salt), and a manganese salt (for example, a sulfate salt), a complexing agent, and a pH regulator to perform neutralization reaction in a reaction vessel. Water is used as a solvent for the slurry, for example.

The complexing agent is not particularly limited as long as it can form a complex with an ion of a metal element, for example, an ion of at least one metal selected from the group consisting of nickel, cobalt, and manganese in an aqueous solution, and examples thereof include an ammonium ion supplying agent. Examples of the ammonium ion supplying agent include ammonia water, ammonium sulfate, ammonium chloride, ammonium carbonate, ammonium fluoride, and the like. In the neutralization reaction, in order to regulate the pH value of the aqueous solution, an alkali metal hydroxide (for example, sodium hydroxide, potassium hydroxide) may be added as the pH regulator as needed.

When the above-described solution including a metal salt, pH regulator, and ammonium ion supplying agent are continuously supplied, as appropriate, to a reaction vessel, and the substances in the reaction vessel are appropriately stirred, the metal (for example, at least one metal selected from the group consisting of nickel, cobalt, and manganese) in the solution including a metal salt is coprecipitated, and slurry including a composite hydroxide is prepared thereby. In the coprecipitation reaction, a composite hydroxide having D50 of 4.0 $\mu$m or less, tapped density (g/ml)/D50 ($\mu$m) of 0.60 g/ml●$\mu$m or more, and a specific surface area measured by a BET method of 15.0 m$^2$/g or less can be obtained by controlling the temperature of the mixture liquid in the reaction vessel to fall within a range of 30°C to 60°C, and controlling the ammonium concentration in the mixture liquid in the reaction vessel to fall within a range of 3.5 g/L to 5.0 g/L when the pH regulator and ammonium ion supplying agent is supplied to the reaction vessel. In addition, pH of the mixture liquid in the reaction vessel on the basis of liquid temperature of 40°C is preferably 11.0 or more and 12.5 or less and particularly preferably 11.5 or more and 12.3 or less. Stirring conditions of a stirring device installed in the reaction vessel and staying time in the reaction vessel may be appropriately adjusted to fall within predetermined ranges.

Examples of the reaction vessel used for the method for producing the composite hydroxide of the present invention can include a continuous type in which the slurry including the obtained composite hydroxide is overflowed to be separated and a batch type in which the slurry is not discharged to the outside of the system until reaction is completed.

As described above, a composite hydroxide having a particle shape can be obtained by filtrating the slurry including the composite hydroxide obtained through the neutralization reaction, followed by washing with an alkali aqueous solution and subsequent washing with water to remove impurities included therein, and then performing heat treatment for drying.

Examples

Next, examples of the composite hydroxide of the present invention will be described. However, the present invention is not limited to these examples unless exceeding the spirit thereof.

Production of nickel composite hydroxides of Examples and Comparative Examples

An aqueous solution in which nickel sulfate, cobalt sulfate, and manganese sulfate were mixed at a predetermined ratio, an ammonium sulfate aqueous solution (ammonium ion supplying agent), and a sodium hydroxide aqueous solution were dropped into a reaction vessel having a predetermined volume followed by continuous stirring by a stirrer while keeping the ammonia concentration and pH on the basis of liquid temperature of 40°C of the mixture liquid contained in the reaction vessel at the values shown in Table 1 below. In addition, the liquid temperature of the mixture liquid in the reaction vessel was kept at the value shown in Table 1 below. Slurry including a composite hydroxide produced by the neutralization reaction was overflowed from an overflow tube of the reaction vessel and taken out. The slurry including the composite hydroxide taken out after retention three or more times in the reaction vessel was filtrated, then washed with an alkali aqueous solution, subsequently washed with water, and further subjected to dehydration treatment and drying treatment to obtain a composite hydroxide having a particle shape.

Neutralization reaction conditions for the composite hydroxides of Examples and Comparative Examples are shown in Table 1 below.

Evaluation items for physical properties of the composite hydroxides of Examples and Comparative Examples and reactivity with a lithium compound are as follows.

(1) Composition analysis for composite hydroxide

Composition analysis was conducted using an inductively coupled plasma emission analyzer (manufactured by Perkin Elmer Japan Co., Ltd., Optima 7300 DV) after the obtained composite hydroxide was dissolved in hydrochloric acid.

(2) D10, D50, and D90

The obtained composite hydroxide was measured by a particle size distribution measuring device (manufactured by NIKKISO CO., LTD., "Microtrac MT3300 EXII") (on the basis of the principle of laser diffraction and scattering method). The value of tapped density/D50 and the value of (D90 - D10)/D10 indicating the particle size distribution width are respectively calculated using the measurement results of D10, D50, and D90.

Measurement conditions of particle size distribution measuring device: solvent: water, refractive index of solvent: 1.33, refractive index of particle: 1.55, transmittance: 80 ± 5%, dispersion medium: 10.0 wt% sodium hexametaphosphate aqueous solution

(3) Tapped density (TD)

Measurement of tapped density was conducted on the obtained composite hydroxide by the constant volume measuring method out of the methods described in JIS R 1628 using TAPDENSER (manufactured by SEISHIN ENTERPRISE CO., LTD., "KYT-4000").

(4) BET specific surface area

After 1 g of the obtained composite hydroxide was dried at 105°C for 30 minutes in a nitrogen atmosphere, the BET specific surface area was measured by a single point BET method using a specific surface area measuring device (manufactured by Mountech Co., Ltd., "Macsorb").

(5) Average particle strength

With respect to the obtained composite hydroxide, displacement of the composite hydroxide was measured by applying test pressure (load) to one arbitrarily selected particle of the composite hydroxide using micro compression tester "MCT-510" (manufactured by SHIMADZU CORPORATION). Particle strength (St) was calculated according to the equation from Hiramatsu et al. (Journal of the Mining and Metallurgical Institute of Japan, Vol. 81, (1965)) represented by mathematical expression (A) below, with a pressure value at which a maximum displacement was provided while keeping test pressure almost constant taken as test force (P) when the test pressure was gradually increased. This operation was carried out five times in total, and the average particle strength was calculated from the average value of the particle strength measured five times.

$$St = 2.8 \times P/(\pi \times d \times d) \text{ (d: diameter of composite hydroxide)} \cdots (A)$$

(6) TG measurement (thermogravimetry)

Lithium hydroxide monohydrate was mixed to each of the composite hydroxides of Example 1 and Comparative Example 1 so that the molar ratio of lithium/(nickel + cobalt + manganese) became 1.05 to prepare a mixture. TG measurement (thermogravimetry) was conducted on the obtained mixture at the maximum temperature of 1000°C, temperature raising rate of 10°C/minute, sampling frequency of 1 time per 30 seconds, and dry air supplying amount of 200 ml/min. In addition, DTG was calculated by differentiating the TG measurement data. As a measurement device for TG, "TG/DTA6300" manufactured by Hitachi, Ltd. was used. The results of TG and DTG in Example 1 are shown in FIG. 1(A), and the results of TG and DTG in Comparative Example 1 are shown in FIG. 1(B). In addition, the temperature at which the composite hydroxide started to react with lithium hydroxide monohydrate was set to a temperature at which DTG became lowest in the range of 350°C ± 50°C from the DTG graph. With respect to the composite hydroxides of Examples 2 and 3 and Comparative Example 2, the start temperature of the reaction with lithium hydroxide monohydrate was also obtained from the results of TG and DTG (not shown) in the same manner.

Composition analysis of the composite hydroxides of Examples and Comparative Examples are shown in Table 1 below, and other evaluation results are shown in Table 2 below.

[Table 1]

| | Unit | Example 1 | Example 2 | Example 3 | Comparative Example 1 | Comparative Example 2 |
|---|---|---|---|---|---|---|
| Composition (molar ratio Ni:Co:Mn) | - | 60:20:20 | 60:20:20 | 60:20:20 | 60:20:20 | 60:20:20 |
| Reaction vessel volume | L | 500 | 500 | 500 | 15 | 15 |
| Reaction temperature | °C | 60 | 50 | 50 | 50 | 70 |

(continued)

|  | Unit | Example 1 | Example 2 | Example 3 | Comparative Example 1 | Comparative Example 2 |
|---|---|---|---|---|---|---|
| Ammonia concentration in reaction vessel | g/L | 4,5 | 3,9 | 4,0 | 0,0 | 3,4 |
| pH (40°C basis) | - | 12,0 | 12,1 | 12,0 | 10,6 | 12,0 |

[Table 2]

|  | D50 | TD | BET specific surface area | TD/D50 | (D90-D10)/D50 | Average particle strength | Start temperature of reaction with lithium hydroxide monohydrate |
|---|---|---|---|---|---|---|---|
| Unit | $\mu$m | g/ml | m$^2$/g | g/ml × mm | - | Mpa | °C |
| Example 1 | 2,64 | 1,92 | 8,4 | 0,73 | 1,60 | 60,7 | 365,7 |
| Example 2 | 3,00 | 1,94 | 9,9 | 0,65 | 1,73 | 71,0 | 360,5 |
| Example 3 | 3,40 | 2,03 | 8,5 | 0,60 | 1,40 | 77,9 | 355,4 |
| Comparative Example 1 | 2,81 | 1,07 | 33,2 | 0,38 | 2,30 | 15,7 | 330,9 |
| Comparative Example 2 | 2,58 | 1,49 | 16,8 | 0,58 | 1,65 | 43,3 | 350,2 |

As shown in Table 2 above, in Examples 1-3 in which composite hydroxides each having D50 of 2.64 to 3.40 $\mu$m, tapped density (g/ml)/D50 ($\mu$m) of 0.60 to 0.73 g/ml●$\mu$m, and a BET specific surface area of 8.4 to 9.9 m$^2$/g were used as precursors, the start temperature of the reaction with lithium hydroxide increased to 355.4°C to 365.7°C, and reactivity with lithium hydroxide was suppressed. From the above, it has been found that in Examples 1 to 3, reactivity with a lithium compound can be equalized with another composite hydroxide having D50 larger than that of Examples 1 to 3. Accordingly, it has been found that in producing a positive electrode active material having multiple peaks in particle size distribution using any of the composite hydroxides of Examples 1 to 3 and another composite hydroxide having D50 larger than D50 of the composite hydroxides of Examples 1 to 3, the composite hydroxide of the present invention is not reacted with an excessive amount of lithium (Li) even when the composite hydroxides of Examples 1-3 and said another composite hydroxide are calcined with a lithium compound added thereto in a state where the composite hydroxides of Examples 1-3 and said another composite hydroxide are mixed, and uniform reaction with the lithium (Li) compound is possible regardless of size of particle diameters. In addition, in Examples 1 to 3 in which the BET specific surface areas were 8.4 to 9.9 m$^2$/g, average particle strength improved to 60.7 to 77.9 MPa.

Especially, in Examples 1 and 2 in which tapped density (g/ml)/D50 ($\mu$m) was 0.65 to 0.73 g/ml●$\mu$m, the start temperature of reaction with lithium hydroxide further increased compared with the case of Example 3 in which tapped density (g/ml)/D50 ($\mu$m) was 0.60 g/ml●$\mu$m, and reactivity with lithium hydroxide could be further suppressed.

On the other hand, in Comparative Examples 1 and 2 in each of which a composite hydroxide having D50 of 2.58 to 2.81 $\mu$m, tapped density (g/ml)/D50 ($\mu$m) of 0.38 to 0.58, and a BET specific surface area of 16.8 to 33.2 m$^2$/g was used as a precursor, the start temperature of reaction with lithium hydroxide remained at the level of 330.9°C to 350.2°C, and reactivity with lithium hydroxide could not be suppressed. Accordingly, it has been found that in Comparative Examples 1 and 2, reactivity with a lithium compound still cannot be equalized with another composite hydroxide having D50 larger than D50 of Comparative Examples 1 and 2. In addition, in Comparative Examples 1 and 2 in which the BET specific surface areas are 16.8 to 33.2 m$^2$/g, average particle strength remained at the level of 15.7 to 43.3 MPa

Industrial Availability

The composite hydroxide of the present invention enables uniform reaction with a lithium (Li) compound regardless of size of a particle diameter of a composite hydroxide having multiple peaks in particle size distribution. Therefore, by virtue of mounting a positive electrode active material obtained from a precursor containing the composite hydroxide of the present invention on a secondary battery using a non-aqueous electrolyte, excellent battery characteristics such as high utilization efficiency, high cycle performance, and large discharge capacity can be imparted. Accordingly, the composite hydroxide of the present invention can be used in various fields such as portable devices and vehicles.

**Claims**

1. A composite hydroxide, comprising at least one metal selected from the group consisting of nickel, cobalt, and manganese, the composite hydroxide being a precursor of a positive electrode active material for a non-aqueous electrolyte secondary battery, wherein

    a secondary particle diameter with a cumulative volume percentage of 50% by volume (D50) is 4.0 $\mu$m or less, tapped density (g/ml)/secondary particle diameter with cumulative volume percentage of 50% by volume (D50) ($\mu$m) is 0.60 g/ml●$\mu$m or more, and
    a specific surface area measured by a BET method is 15.0 $m^2$/g or less.

2. The composite hydroxide according to claim 1, wherein the secondary particle diameter with a cumulative volume percentage of 50% by volume (D50) is 3.5 $\mu$m or less.

3. The composite hydroxide according to claim 1 or 2, wherein the composite hydroxide comprises nickel, cobalt, manganese, and one or more additive metal elements M selected from the group consisting of aluminum (Al), calcium (Ca), titanium (Ti), vanadium (V), chromium (Cr), zirconium (Zr), niobium (Nb), molybdenum (Mo), and tungsten (W), and a molar ratio of nickel:cobalt:manganese:M is 1 - x - y - z:x:y:z (meaning that $0.1 \leq x \leq 0.3$, $0.1 \leq y \leq 0.3$, $0 < z \leq 0.05$, and $x + y + z = 1$).

4. The composite hydroxide according to any one of claims 1 to 3, wherein [secondary particle diameter with cumulative volume percentage of 90% by volume (D90) - secondary particle diameter with cumulative volume percentage of 10% by volume (D10)]/secondary particle diameter with cumulative volume percentage of 50% by volume (D50) is 1.30 or more and 1.80 or less.

5. The composite hydroxide according to any one of claims 1 to 4, wherein average particle strength is 45 MPa or more and 100 MPa or less.

FIG.1(A)

FIG.1(B)

## INTERNATIONAL SEARCH REPORT

| International application No. |
| --- |
| PCT/JP2019/047316 |

**A.    CLASSIFICATION OF SUBJECT MATTER**
C01G 53/00(2006.01)i; H01M 4/505(2010.01)i; H01M 4/525(2010.01)i
FI: H01M4/525; C01G53/00 A; H01M4/505

According to International Patent Classification (IPC) or to both national classification and IPC

**B.    FIELDS SEARCHED**

Minimum documentation searched (classification system followed by classification symbols)
C01G53/00; H01M4/505; H01M4/525

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2011-501727 A (H.C. STARCK GMBH) 13.01.2011 (2011-01-13) example 3, table 2 | 1-5 |
| A | JP 2017-525090 A (UMICORE) 31.08.2017 (2017-08-31) claims, tables 2-3 | 1-5 |
| A | WO 2017/204164 A1 (SUMITOMO CHEMICAL CO., LTD.) 30.11.2017 (2017-11-30) table 2 | 1-5 |
| A | JP 2013-246983 A (SUMITOMO METAL MINING CO., LTD.) 09.12.2013 (2013-12-09) table 2 | 1-5 |
| A | JP 2010-536697 A (H.C. STARCK GMBH) 02.12.2010 (2010-12-02) claims, table 2 | 1-5 |
| A | JP 2016-26981 A (ASAHI GLASS CO., LTD.) 18.02.2016 (2016-02-18) table 1 | 1-5 |

☐    Further documents are listed in the continuation of Box C.          ☒    See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| 27 February 2020 (27.02.2020) | 10 March 2020 (10.03.2020) |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

**INTERNATIONAL SEARCH REPORT**
Information on patent family members

International application No.

PCT/JP2019/047316

| Patent Documents referred in the Report | Publication Date | Patent Family | Publication Date |
|---|---|---|---|
| JP 2011-501727 A | 13 Jan. 2011 | JP 5553761 B2<br>US 2010/0310869 A1<br>example 3, table 2<br>WO 2009/049955 A1<br>DE 102007049108 A1<br>CA 2695763 A1<br>KR 10-2010-0067086 A<br>CN 101903292 A | |
| JP 2017-525090 A | 31 Aug. 2017 | US 2017/0133675 A1<br>claims, tables 2-3<br>WO 2015/189737 A1<br>CN 106463723 A<br>KR 10-2017-0016959 A | |
| WO 2017/204164 A1 | 30 Nov. 2017 | US 2019/0296347 A1<br>table 2<br>CN 109155410 A<br>KR 10-2019-0009299 A | |
| JP 2013-246983 A | 09 Dec. 2013 | (Family: none) | |
| JP 2010-536697 A | 02 Dec. 2010 | JP 5383681 B2<br>US 2011/0180748 A1<br>claims, table 2<br>US 2015/0210561 A1<br>WO 2009/024424 A2<br>DE 102007039471 A<br>CA 2694915 A<br>KR 10-2010-0066455 A<br>CN 101778800 A | |
| JP 2016-26981 A | 18 Feb. 2016 | US 2015/0380737 A1<br>table 1<br>CN 105226266 A | |

Form PCT/ISA/210 (patent family annex) (January 2015)

12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013171744 A

**Non-patent literature cited in the description**

- **HIRAMATSU et al.** *Journal of the Mining and Metallurgical Institute of Japan,* 1965, vol. 81